# EUROPEAN PATENT APPLICATION

(11) **EP 4 205 577 A1**
(43) Date of publication of application: **05.07.2023**
(21) Application number: 23150525.6
(22) Date of filing: 19.11.2015
(51) Int. Cl.: A24F 40/30, A24F 40/50, A24F 40/10

(54) **ELECTRONIC SMOKING DEVICE WITH NON-SIMULTANEOUSLY OPERATED HEATING ELEMENTS**

(62) Divisional of application: 15195358.5
(71) Applicant: Fontem Ventures B.V., 1043 NT Amsterdam (NL)
(72) Inventor: Burseg, Kerstin, 22761 Hamburg (DE)
(74) Representative: Gulde & Partner

(57) **Abstract**

An electronic smoking device (1) is provided comprising a primary and a secondary liquid reservoir (3, 5). The electronic smoking device (1) further comprises a primary heating element (6) adapted to atomize liquid of the primary liquid reservoir (3) and a secondary heating element (8) adapted to atomize liquid of the secondary liquid reservoir (5). Moreover, the electronic smoking device (1) comprises a battery (11), an activation switch (12) and an operation unit (14), electrically connected to the battery (11) and the primary and secondary heating element (6, 8) respectively. The operation unit (14) is adapted to non-simultaneously supply at least one pulse of power from the battery (11) to the primary and the secondary heating element (6, 8) respectively upon an actuation of the activation switch (12).

## Description

### FIELD OF INVENTION

The present invention relates generally to electronic smoking devices and in particular electronic cigarettes.

### BACKGROUND OF THE INVENTION

An electronic smoking device, such as an electronic cigarette (e-cigarette), typically has a housing accommodating an electric power source (e.g. a single use or rechargeable battery, electrical plug, or other power source), and an electrically operable atomizer. The atomizer vaporizes or atomizes liquid supplied from a reservoir and provides vaporized or atomized liquid as an aerosol. Control electronics control the activation of the atomizer. In some electronic cigarettes, an airflow sensor is provided within the electronic smoking device, which detects a user puffing on the device (e.g., by sensing an under-pressure or an air flow pattern through the device). The airflow sensor indicates or signals the puff to the control electronics to power up the device and generate vapor. In other e-cigarettes, a switch is used to power up the e-cigarette to generate a puff of vapor.

Most electronic smoking devices are adapted to initiate a constant, uninterrupted atomization of a base liquid mixture upon an activation of the same, wherein energy from the battery is constantly supplied to a single heating element for a predetermined interval of time, providing a constant stream of an aerosol mix. Such electronic smoking devices are often used as cessation aids by smokers who want to quit smoking, wherein nicotine is commonly dissolved within the base liquid mixture. The availability of nicotine to the body is greatest if nicotine enters the blood stream via the lungs. However, research suggests that most of the nicotine - about 80% - deposits in the oral cavity of a user when supplied as a component of a vaporized base liquid mixture, since nicotine is at least partially being attached to the base liquid particles of the aerosol generated. Therefore, a constant, uninterrupted atomization of a mixture of different substances as for example nicotine and a flavored liquid within an electronic smoking device causes a low availability of nicotine to the human body, is not adjusted to the sensory receptors of the human body, and causes a dissipation of energy available within the battery.

### SUMMARY OF THE INVENTION

In accordance with one aspect of the present invention there is provided an electronic smoking device comprising a primary and a secondary liquid reservoir and a primary heating element adapted to atomize liquid of the primary liquid reservoir. The electronic smoking device further comprises a secondary heating element adapted to atomize liquid of the secondary liquid reservoir, a battery and an activation switch. Moreover, the electronic smoking device comprises an operation unit, which is electrically connected to the battery and the primary and the secondary heating element respectively. The operation unit is adapted to non-simultaneously supply at least one pulse of power from the battery to the primary and the secondary heating element respectively upon an actuation of the activation switch.

The characteristics, features and advantages of this invention and the manner in which they are obtained as described above, will become more apparent and be more clearly understood in connection with the following description of exemplary embodiments, which are explained with reference to the accompanying drawings.

### BRIEF DESCRIPTION OF THE DRAWINGS

In the drawings, same element numbers indicate same elements in each of the views:
- Figure 1: is a schematic cross-sectional illustration of a first embodiment of an electronic smoking device,
- Figure 2: is a schematic cross-sectional illustration of a second embodiment of an electronic smoking device,
- Figure 3: is a schematic cross-sectional illustration of a third embodiment of an electronic smoking device,
- Figure 4: is a schematic cross-sectional illustration of a fourth embodiment of an electronic smoking device,
- Figure 5: is a schematic illustration of cross-section along the breadth of the liquid reservoir portion of the fourth embodiment of an electronic smoking device,
- Figure 6: is a schematic cross-sectional illustration of a fifth embodiment of an electronic smoking device,
- Figure 7: is a diagram showing a first exemplary mode of operation of the primary and secondary heating element of the first, second and third embodiment of an electronic smoking device,
- Figure 8: is a diagram showing a second exemplary mode of operation of the primary and secondary heating element of the fourth embodiment of an electronic smoking device, and
- Figure 9: is a diagram showing a third exemplary mode of operation of the primary and secondary heating element of the fifth embodiment of an electronic smoking device.

### DESCRIPTION OF THE PREFERRED EMBODIMENTS

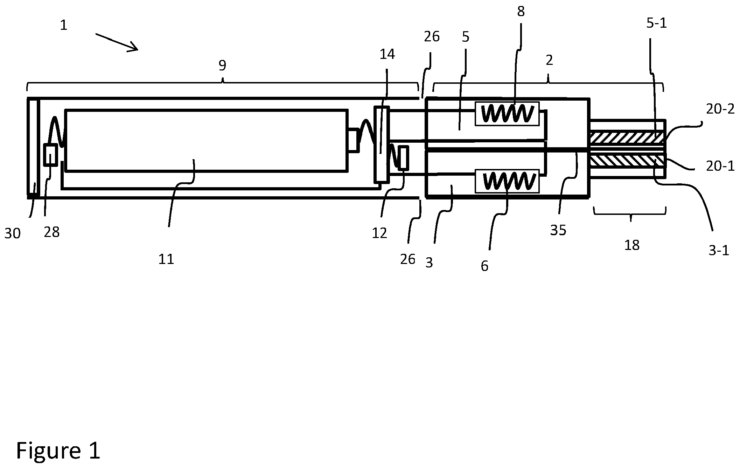

Throughout the following, a first embodiment of an electronic smoking device 1 will be exemplarily described. As is shown in Figure 1, an electronic smoking device 1 has a housing comprising a cylindrical hollow tube having an end cap 30. The cylindrical hollow tube may be a single-piece or a multiple-piece tube. In Figure 1, the cylindrical hollow tube is shown as a two-piece structure having a battery portion 9 and an atomizer/liquid reservoir portion 2. Together the battery portion 9 and the atomizer/liquid reservoir portion 2 form a cylindrical tube which can be approximately the same size and shape as a conventional cigarette, typically about 100 mm with a 7.5 mm diameter, although lengths may range from 70 to 150 or 180 mm, and diameters from 5 to 20 mm.

The battery portion 9 and atomizer/liquid reservoir portion 2 are typically made of metal, e.g. steel or aluminum, or of hardwearing plastic and act together with the end cap 30 to provide a housing to contain the components of the electronic smoking device 1. The battery portion 9 and an atomizer/liquid reservoir portion 2 may be configured to fit together by a friction push fit, a snap fit, or a bayonet attachment, magnetic fit, or screw threads. The end cap 30 is provided at the front end of the battery portion 9. The end cap 30 may be made from translucent plastic or other translucent material to allow an LED 28 positioned near the end cap 30 to emit light through the end cap 30. The end cap 30 can be made of metal or other materials that do not allow light to pass.

At least one air inlet 26 may be provided in the end cap 30, at the edge of the inlet next to the cylindrical hollow tube, anywhere along the length of the cylindrical hollow tube, or at the connection of the battery portion 9 and the atomizer/liquid reservoir portion 2. Figure 1 shows a pair of air inlets 26 provided at the intersection between the battery portion 9 and the atomizer/liquid reservoir portion 2.

A battery 11, a light-emitting diode (LED) 28, an operation unit 14 and an activation switch 12, which in this first embodiment exemplarily is realized as an airflow sensor are provided within the cylindrical hollow tube battery portion 9. The battery 11 is electrically connected to the operation unit 14, which is electrically connected to the activation switch 12. In this first embodiment, the operation unit 14 is further exemplarily connected to the LED 28. In this example the LED 28 is at the front end of the battery portion 9, adjacent to the end cap 30 and the operation unit 14. The activation switch 12, which is realized as an airflow sensor is provided in the central cavity at the other end of the battery 11 adjacent the atomizer/liquid reservoir portion 2.

The airflow sensor acts as a puff detector, detecting a user puffing or sucking on the atomizer/liquid reservoir portion 2 of the electronic smoking device 1. The airflow sensor can be any suitable sensor for detecting changes in airflow or air pressure, such as a microphone switch including a deformable membrane which is caused to move by variations in air pressure. Alternatively the activation switch 12 may be any sensor, for example a Hall element or an electromechanical sensor. However, the activation switch 12 can also be realized as a mechanical switch, for example a push button, a slide button, a lever or the like.

The electronic smoking device 1 comprises a primary liquid reservoir 3 and a secondary liquid reservoir 5 which in this first embodiment are exemplarily realized as spatially separated chambers within the atomizer/liquid reservoir portion 2. In this first embodiment, the spatial separation between the primary and the secondary liquid reservoir 3, 5 is exemplarily performed via a separation wall 35 which extends along the length of the reservoirs 3, 5. The secondary liquid reservoir 5 is exemplarily adapted to receive a base liquid while the primary liquid reservoir 3 is adapted to receive a concentrated nicotine-solution. However, the primary and the secondary liquid reservoir 3, 5 can also be adapted to receive any other liquid. In such an embodiment, the electronic smoking device 1 advantageously allows the separate consumption of nicotine and an aroma. Furthermore, the electronic smoking device 1 comprises a primary heating element 6 adapted to atomize liquid of the primary liquid reservoir 3 and a secondary heating element 8 adapted to atomize liquid of the secondary liquid reservoir 5. In Figure 1, the primary and the secondary heating element 6, 8 are shown as being arranged within the primary and the secondary liquid reservoirs 3, 5 respectively. However, the representation is only schematically and other arrangements are possible. The primary and the secondary heating elements 6, 8 are arranged such that liquid from the primary and secondary liquid reservoirs 3 can be atomized upon on an operation of the primary and the secondary heating elements 6, 8 respectively.

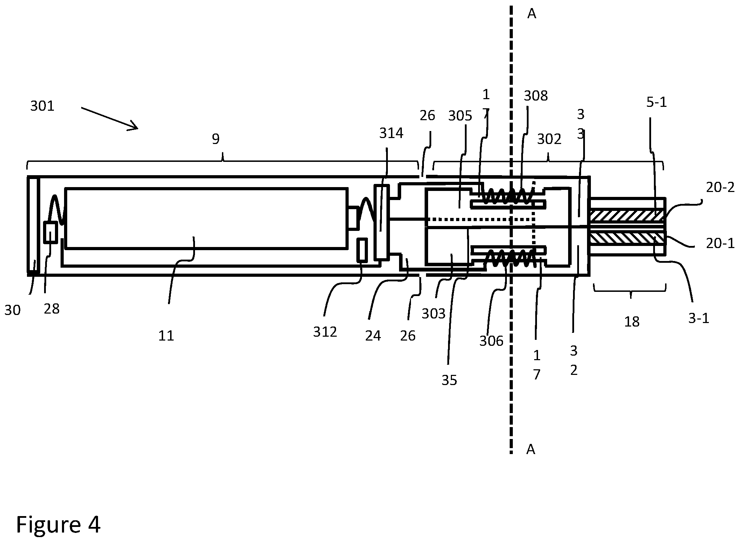

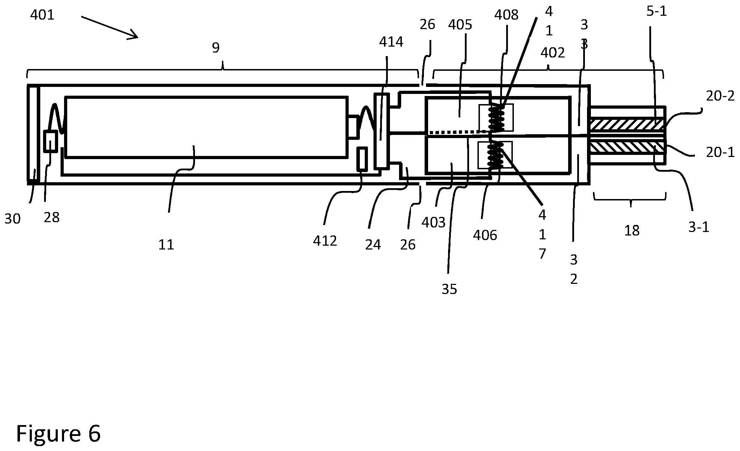

Expressed in other words, the primary heating element 6 is arranged such that liquid from the primary liquid reservoir 3 is atomized upon an operation of the primary heating element 6, wherein the secondary heating element 8 is arranged such that liquid from the secondary liquid reservoir 5 is atomized upon an operation of the secondary heating element 8. The primary and secondary heating element 6, 8 may be realized as heating coils which are wrapped around a wick respectively. Such coils and/or wicks may be positioned anywhere in the atomizer/liquid reservoir portion 2 and may be transverse or parallel to the primary and secondary liquid reservoirs 3, 5 respectively (cf. Figures 4 and 6). Furthermore, such wicks and heating coils do not completely block the air passage through the electronic smoking device 1. Rather an air gap is provided on either side of the heating coil enabling air to flow past the heating coil and the wick (not shown). However, the primary and secondary heating element 6, 8 can also be realized as any other type of heating element respectively, such as for example ceramic heaters, or fiber or mesh material heaters. Non-resistance heating elements such as sonic, piezo and jet spray may also be used in the atomizer/liquid reservoir portion 2 in place of a heating coil.

The operation unit 14 is electrically connected to the battery 11 and the primary and the secondary heating element 6, 8 respectively, allowing a separate electrical activation/operation and a separate electrical control of the heating elements 6, 8 respectively. In more detail, a first electronic connector is electrically connected to a first terminal of the operation unit 14 and to a first terminal of the primary heating element 6. A second electronic connector is electrically connected to a second terminal of the operation unit 14 and to a first terminal of the secondary heating element 8. A third electronic connector is electrically connected to a third terminal of the operation unit 14 and to the second terminals of the primary and the secondary heating element 6, 8 respectively.

The operation unit 14 is adapted to non-simultaneously supply at least one pulse of power from the battery 11 to the primary and the secondary heating element 6, 8 respectively upon an actuation of the activation switch 12 via its first and second terminal. Expressed in other words, upon a single actuation of the activation switch 12, the operation unit 14 is adapted to provide power from the battery 11 first to the primary heating element 6, 8 via its first terminal and after a predetermined interval of time, to the secondary heating element 8 via its second terminal. So upon a single actuation of the activation switch 12, power from the battery 11 is provided to the primary heating element 6 prior to the provision of power to the secondary heating element 8. Such a non-simultaneous operation of the primary and secondary heating element 6, 8 within the primary and secondary liquid reservoir 3, 5 of the atomizer/liquid reservoir portion 2 respectively allows a space-wisely and time-wisely separated generation of nicotine aerosol and e. g. flavour aerosol within the electronic smoking device 1. This reduces the deposition of nicotine within the oral cavity of a user and increases its availability to the lungs, since the nicotine can be generated and consumed prior to the generation and consumption of e. g. a flavoured aerosol.

In this first embodiment, the atomizer/liquid reservoir portion 2 comprises a mouthpiece 18 with a diameter that is smaller than the diameter of the section of the atomizer/liquid reservoir portion 2 the primary and secondary liquid reservoir 3, 5 are arranged in. Two separate air inhalation ports 20-1, 20-2 are provided at the back end of the mouthpiece 18 remote from the end cap 30. Expressed in other words, the air inhalation ports 20-1, 20-2 are arranged on an end of the mouthpiece 18 facing away from the electronic smoking device 1 and its atomizer/liquid reservoir portion 2. In this first embodiment, the mouthpiece 18 comprises two separate connection elements 3-1, 5-1 realized as separate tubes which allow aerosol to flow from a respective liquid reservoir 3, 5 to one of the air inhalation ports 20-1, 20-2 respectively. In more detail, the mouthpiece 18 comprises a connection element of the primary liquid reservoir 3-1 which allows aerosol to flow from the primary liquid reservoir 3 to the mouth of a user of the electronic smoking device 1 via a primary air inhalation port 20-1 without being mixed with aerosol from the secondary liquid reservoir 5. The mouthpiece 18 further comprises a connection element of the secondary liquid reservoir 5-1 which allows aerosol to flow from the secondary liquid reservoir 5 to the mouth of a user of the electronic smoking device 1 via a secondary air inhalation port 20-2 without being mixed with aerosol from the primary liquid reservoir 3. However, such a mouthpiece 18 is only optional and it is also possible to realize electronic smoking devices 1 without a mouthpiece 18 or with mouthpieces 18 of another shape and another arrangement on the electronic smoking device 1. The inhalation ports 20-1, 20-2 may be formed from the cylindrical hollow tube atomizer/liquid reservoir portion 2 or maybe formed in an end cap.

In use, a user sucks on the electronic smoking device 1. This causes air to be drawn into the electronic smoking device 1, via one or more air inlets, such as the air inlets 26, and to be drawn through the atomizer/liquid reservoir portion 2, through the connection elements 3-1, 5-1 of the primary and secondary liquid reservoirs 3, 5 within the mouthpiece 18 and towards the respective air inhalation ports 20-1, 20-2. In this first embodiment, the change in air pressure which arises is detected by the airflow sensor, which generates an electrical signal that is passed to the operation unit 14. In response to the signal, the operation unit 14 non-simultaneously supplies at least one pulse of power from the battery 11 to the primary and the secondary heating element 6, 8 respectively. This will first cause liquid present in the primary liquid reservoir 3 to be vaporized creating an aerosol (which may comprise gaseous and liquid components) and then, after a predetermined period of time, will cause liquid present in the secondary liquid reservoir 5 to be vaporized, also creating an aerosol (which also may comprise gaseous and liquid components). This process will be repeated as long as the user continues to suck on the electronic smoking device 1, wherein the width of the pulses of power supplied to the primary and the secondary heating elements 6, 8 corresponds to the duration of a respective puff. At the same time, in this first embodiment, the operation unit 14 optionally also activates the LED 28 causing the LED 28 to light up which is visible via the translucent end cap 30 mimicking the appearance of a glowing ember at the end of a conventional cigarette.

Some electronic smoking devices 1 are intended to be disposable and the electric power in the battery 11 is intended to be sufficient to vaporize the liquid contained within the primary and secondary liquid reservoirs 3, 5 respectively, after which the electronic smoking device 1 is thrown away. In other embodiments the battery 11 is rechargeable and the primary and secondary liquid reservoirs 3, 5 are refillable respectively. This may be achieved by refilling the liquid reservoirs 3, 5 via a refill port respectively. In other embodiments the atomizer/liquid reservoir portion 2 of the electronic smoking device 1 is detachable from the battery portion 9 and a new atomizer/liquid reservoir portion 2 can be fitted with new primary and secondary liquid reservoirs 3, 5 thereby replenishing the supply of liquid. In some cases, replacing the primary and secondary liquid reservoirs 3, 5 may involve replacement of the primary and secondary heating element 6, 8 along with the replacement of the primary and secondary liquid reservoirs 3, 5. A replaceable unit comprising the primary and secondary heating elements 6, 8 and the primary and secondary liquid reservoirs 3, 5 is called a cartomizer.

Of course, in addition to the above description of the structure and function of a typical electronic smoking device 1, variations also exist. For example, the LED 28 may be omitted. The airflow sensor or another activation switch 12 may be placed adjacent the end cap 30 rather than in the middle of the electronic smoking device 1. The airflow sensor may be replaced with a switch which enables a user to activate the electronic smoking device 1 manually rather than in response to the detection of a change in air flow or air pressure.

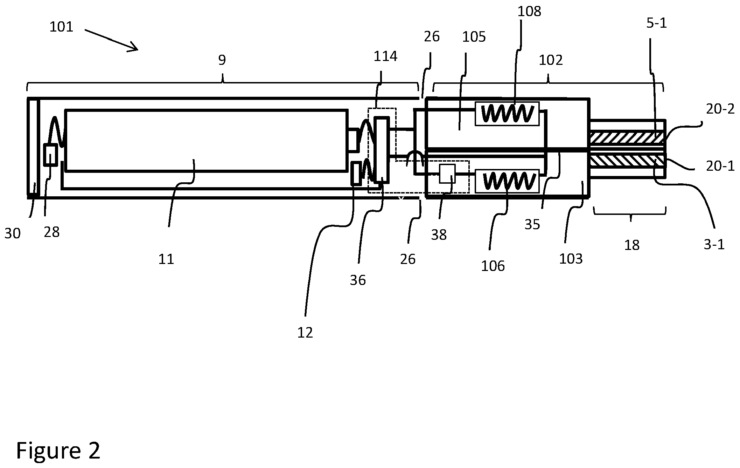

Figure 2 shows a schematic cross-sectional illustration of a second embodiment of an electronic smoking device 101. The second embodiment of the electronic smoking device 101 is substantially identical to the first embodiment of an electronic smoking device 1 as shown in Figure 1. Therefore, the reference signs in Figure 2, which are identical to the respective reference signs shown in Figure 1, denote equal components for which the description as given above does apply. Also in this second embodiment, the electronic smoking device 101 comprises an atomizer/liquid reservoir portion 102 with a primary and a secondary liquid reservoir 103, 105 therein. The primary and secondary liquid reservoirs 103, 105 are spatially separated from each other via a separation wall 35. Furthermore, the electronic smoking device 101 comprises a primary heating element 106 adapted to atomize liquid of the primary liquid reservoir 103 and a secondary heating element 108 adapted to atomize liquid of the secondary liquid reservoir 105. In this second embodiment of the invention, the secondary liquid reservoir 105 is adapted to receive a base liquid and/or a flavoured liquid. Such flavoured liquids may be liquids with flavoured materials added thereto. Such materials may be esters, such as isoamyl acetate, linalyl acetate, isoamyl propionate, linalyl butyrate and the like or natural essential oils as plant essential oils, such as spearmint, peppermint, cassia, jasmine and the like or animal essential oils, such as musk, amber, civet, castor and the like or simple flavouring materials, such as anethole, limonene, linalool, eugenol and the like or hydrophilic flavour components such as a leaf tobacco extract or natural plant flavouring materials such as licorice, St. John's wort, a plum extract, a peach extract and the like or acids such as a malic acid, tartaric acid, citric acid and the like or sugars such as glucose, fructose, isomerized sugar and the like or polyhydric alcohols such as propylene glycol, glycerol, sorbitol and the like. It is also possible to combine different flavoured materials as mentioned above into new flavoured materials. Moreover, it is possible to adsorb any flavour onto a solid material and to use this material as flavoured material within an electronic smoking device 101.

The primary liquid reservoir 103 is adapted to receive a concentrated nicotine-solution. However, it is also possible to realize an electronic smoking device 101 with a primary liquid reservoir 103 which is adapted to receive a flavoured liquid as mentioned before as well.

A battery 11 is used to power the electronic smoking device 101. Furthermore, the electronic smoking device 101 comprises an activation switch 12, which also in this second embodiment is realized as an airflow sensor. Moreover, in this second embodiment, the arrangement of the primary and the secondary heating element 106, 108 within the primary and secondary liquid reservoir 103, 105 is only schematically and may differ from the one shown in Figure 2. For example, the primary and secondary heating elements 106, 108 can be arranged outside of the primary and secondary liquid reservoirs 103, 105 respectively. Basically, any arrangement of the primary and secondary heating element 106, 108 within the electronic smoking device 101 can be realized, as long as it is possible to atomize liquid of the primary liquid reservoir 103 with the primary heating element 106 and to atomize liquid of the secondary liquid reservoir 105 with the secondary heating element 108. Furthermore, the shape and arrangement of the primary and secondary liquid reservoir 103, 105 may differ from the one shown in Figure 2. Basically, any shape and arrangement of the primary and secondary liquid reservoir 103, 105 within the electronic smoking device 101 can be realized as long as the primary and the secondary liquid reservoir 103, 105 are separated from each other and gaseous components (atomized liquid) therefrom can be separately drawn to the air inhalation ports 20-1, 20-2 within the mouthpiece 18 respectively.

In this second embodiment, the electronic smoking device 101 comprises an operation unit 114, which is electrically connected to the battery 11 and the primary and secondary heating element 106, 108 respectively. In Figure 2, the operation unit 114 and its position within the electronic smoking device 101 is indicated by a dotted line. It is in part arranged within the battery portion 9 and within the atomizer/liquid reservoir portion 102, in between the battery 11 and the heating elements 106, 108 and adapted to non-simultaneously supply at least one pulse of power from the battery 11 to the primary and the secondary heating element 106, 108 respectively, upon an actuation of the activation switch 12, which is electrically connected to the operation unit 114. In this second embodiment, the operation unit 114 exemplarily comprises a driver unit 36 and a delay unit 38. The driver unit 36 is electrically connected to the terminals of the battery 11. Furthermore, the driver unit 36 is connected to the first terminal of the primary heating element 106 and to an input terminal of the delay unit 38 via a first connector. An output terminal of the delay unit 38 is electrically connected to a first terminal of the secondary heating element 108. The second terminals of the primary and secondary heating elements 106, 108 are electrically connected to each other and to the driver unit 36 of the operation unit 114. In this second embodiment of the invention, the operation unit 114 is adapted to supply a pulse of power to the primary heating element 106 prior to a supply of a pulse of power to the secondary heating element 108. This allows e.g. nicotine within the primary liquid reservoir 103 to be vaporized prior to the vaporization of e.g. flavoured liquid within the secondary liquid reservoir 105. This will advantageously cause a time-wise separation of the supply of nicotine aerosol and the supply of a base liquid aerosol, increasing the availability of nicotine to the body of the user. Therefore, nicotine is delivered in the form of a gas, preceding the delivery of the base liquid aerosol in order to avoid deposition of nicotine in the mouth of the consumer. This will improve nicotine pharmacokinetics as nicotine availability to the lungs is increased and is beneficial for the consumer as nicotine craving is mediated to a larger extend than in a conventional electronic smoking device. Furthermore, together with enhanced nicotine sensory properties, this may mimic a better smoking experience and thus facilitate a consumers attempt to quit smoking.

In this second embodiment, the driver unit 36 is adapted to supply a current pulse of a predetermined width W and amplitude to the first connector upon an actuation of the activation switch 12. Expressed in other words, the driver unit 36 is adapted to supply a current pulse of a predetermined width W and amplitude to the first connector, as soon as the airflow sensor detects a puff on the electronic smoking device 101. Within a predetermined time interval t, this current pulse is simultaneously supplied to the first terminal of the primary heating element 106 and to the input terminal of the delay unit 38. The delay unit 38 delays the incoming current pulse by a time t_{d}. This causes the current pulse to be supplied to the first terminal of the secondary heating element 108 in a time interval t+t_{d}, since it is delayed by the delay unit 38. t_{d} is equal to a predefined delay time, which in this second embodiment is exemplarily equal to 200ms. However, it is also possible to realise embodiments of electronic smoking devices 101 as shown in Figure 2 with a predefined delay time of t_{d} = 10ms, 20ms, 30ms, 40ms, 50ms, 60ms, 70ms, 80ms, 90ms, 100ms, 110ms, 120ms, 130ms, 140ms, 150ms, 160ms, 170ms, 180ms, 190ms, 210ms, 220ms, 230ms, 240ms, 250ms, 260ms, 270ms, 280ms, 290ms, 300ms, 310ms, 320ms, 330ms, 340ms, 350ms, 360ms, 370ms, 380ms, 390ms, 400ms, 410ms or of Xms, wherein X is greater than 410 ms. Expressed in other words, the time interval between a pulse of power or current supplied to the primary heating element 106 and a pulse of power or current supplied to the secondary heating element 108 has a length of T = 200ms. However, it is also possible to realise other embodiments of electronic smoking devices 101 which are constructed such that the time interval between a pulse of power or current supplied to the primary heating element 106 and a pulse of power or current supplied to the secondary heating element 108 has a length of substantially T = 200ms. In such an embodiment, the delay time t_{d} and therefore the time interval between a pulse of power or current supplied to the primary heating element 106 and a pulse of power or current supplied to the secondary heating element 108 is long enough for nicotine from the primary liquid reservoir 103 to be separately inhaled by a user and short enough for a user to be incapable of realising the time-wise separation of nicotine supply and the supply of the base liquid or the flavoured liquid. Expressed in other words, this allows to increase the availability of nicotine to the body while at the same time the convenient sensorial experience of consuming a flavored aerosol together with the nicotine is maintained. In other embodiments, the time interval between a pulse of power supplied to the primary heating element 106 and a pulse of power supplied to the secondary heating element 108 has a length of T, wherein T E [100 ms; 300 ms]. In such an embodiment, the time gap between the two pulses of power supplied to the primary and secondary heating element 106, 108 respectively can be adjusted according to the sensorial characteristics of a user. In this second embodiment, the width W of a pulse of power provided to the primary or secondary heating element 106, 108 is exemplarily predefined. However, it is also possible to realize electronic smoking devices 101 with operation units 114 that allow to provide pulses of power to the primary and secondary heating elements 106, 108, wherein the width W of a respective pulse of power supplied to the primary and/or the secondary heating element 106, 108 is not predefined but controllable by a user. Furthermore, the width W of a pulse of power supplied to the primary and/or the secondary heating element 106, 108 can be adjustable by a user of the electronic smoking device 101, for example the width W can be equal to the duration the activation switch 12 is actuated respectively. In such an embodiment, the width W of a pulse of power supplied to the primary and/or the secondary heating element 106, 108 can be adjusted according to the respective preferences of a user of the electronic smoking device 101. In this second embodiment, the delay unit 38 exemplarily comprises a capacity, logical components and further electronic components. However, any other sort of delay unit 38 can be used which does not necessarily need to comprise a capacity or a logical unit and can also comprise other components as e.g. resonant circuits or flip-flop circuits.

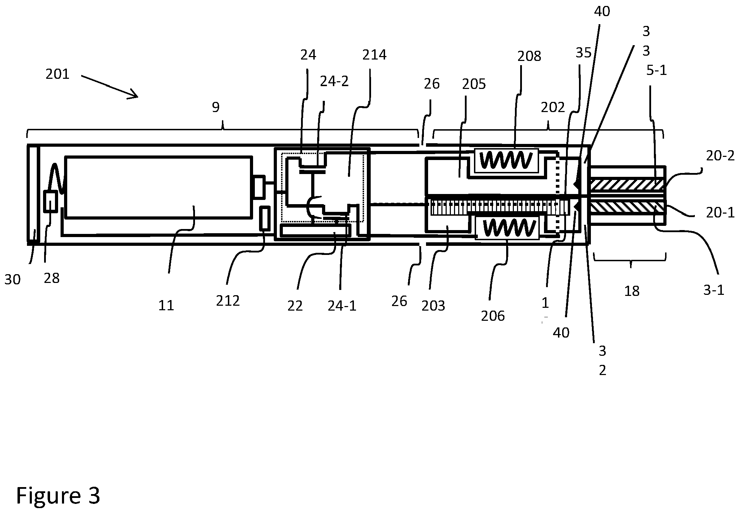

Figure 3 is a schematic cross-sectional illustration of a third embodiment of an electronic smoking device 201. The third embodiment of an electronic smoking device 201 is substantially identical to the first and second embodiment of an electronic smoking device 1, 101 as shown in Figure 1 and 2. Therefore, the reference signs in Figure 1 and 2, which are identical to the respective reference signs shown in Figure 3, denote equal components for which the description as given above does apply. In this third embodiment, the electronic smoking device 201 differs from the electronic smoking devices 1, 101 as presented in Figure 1 and 2 in the operation unit 214, the activation switch 212, the primary and secondary heating element 206, 208 and in the primary and secondary liquid reservoirs 203, 205. In this third embodiment of the invention, the operation unit 214 comprises a signal generation unit 22 which is adapted to provide operation signals to a control unit 24 upon an actuation of the activation switch 212, and a control unit 24 which is adapted to cause power from the battery 11 to be supplied to the primary and the secondary heating element 206, 208 respectively according to the operation signals of the signal generation unit 22. The control unit 24 comprises a first and a second switch 24-1, 24-2, which allow to provide the pulses of power from the battery 11 to the primary and secondary heating elements 206, 208 respectively. This causes a very flexible and precise control of the pulses of power or current pulses supplied to the primary and secondary heating element 206, 208 respectively, since the duration for which the first and second switch 24-1, 24-2 are conductive can precisely be controlled.

In Figure 3, the control unit 24 is indicated by dotted lines. Also in this third embodiment, the operation unit 214 is arranged within the battery portion 9, in between the battery 11 and the atomizer/liquid reservoir portion 202. The first and second switch 24-1, 24-2 of the control unit 24 each comprise a control input terminal and two current path terminals. The current path terminals are each contacting a current path of the respective switch 24-1, 24-2, which can be switched into a conductive state and into a non-conductive state. The first current path terminals of the first and second switch 24-1, 24-2 are electrically connected to a first terminal of the battery 11 respectively. The remaining current path terminal of the first switch 24-1 is electrically connected to the first terminal of the primary heating element 206. The remaining current path terminal of the second switch 24-2 is electrically connected to the first terminal of the secondary heating element 208. The control input terminals of the first and the second switch 24-1, 24-2 are electrically connected to the signal generation unit 22. The second terminals of the primary and secondary heating element 206, 208 are electrically connected with each other and with the second terminal of the battery 11 respectively. The connectors realizing this electrical connection are shown as a partly dotted line in Figure 3 since they are arranged behind the primary and the secondary liquid reservoirs 203, 205. However, it is also possible to realize electronic smoking devices 201 with second terminals of the primary and secondary heating elements 206, 208, which are not connected to each other.

Also in this third embodiment, the electronic smoking device 201 comprises an activation switch 212, which is electrically connected to the operation unit 214. In this third embodiment, the activation switch 212 is exemplarily realized as a push button, which activates the electronic smoking device 201 as long as the push button remains pushed. However, it is also possible to realize electronic smoking devices 201 as shown in Figure 3 with other activation switches 212, for example with airflow sensors or the like. Upon an actuation of the activation switch 12, the signal generation unit 22 non-simultaneously supplies an operation signal to the control input terminals of the first and second switch 24-1, 24-2 respectively, consecutively transferring them into a conductive state for a predefined period of time. As long as the signal of the control unit 24 is supplied to the control input terminals, the switches 24-1, 24-2 - or in more detail, the current paths of the switches 24-1, 24-2 - remain conductive, causing the battery 11 to provide power to the primary and secondary heating element 206, 208 respectively. In such an embodiment, the user himself/herself controls the width W of the pulses of power supplied to the primary and the secondary heating elements 206, 208 respectively by maintaining the push button in a pushed state. In this third embodiment, the switches 24-1, 24-2 are exemplarily realized as transistors, in more detail, as MOSFETs. However, also other sorts of transistors, as for example bipolar-transistors or other sorts of switches or switching means or elements can be realized as switches 24-1, 24-2.

In Figure 3, the primary liquid reservoir 203 is exemplarily adapted to receive a solid carrier material 16 with the concentrated nicotine-solution adhering thereto. In such an embodiment, the storage, arrangement and availability of nicotine within the primary liquid reservoir 203 is improved. Moreover, it is possible to receive and store pure nicotine. Furthermore, it is possible to deliver pure, base-liquid-free and only air-diluted nicotine. However, it is also possible to realize electronic smoking devices 201 with primary liquid reservoirs 203 which are adapted to receive a concentrated nicotine-solution as a liquid without it being adhered to a solid carrier material 16. In such an embodiment, nicotine can also be present in a diluted state, for example as PG or VG solvents. This will allow a generation or formation of for example nicotine-PG liquid particles but to a lesser extend as in conventional liquid/device combinations. In this third embodiment, the primary and secondary liquid reservoir 203, 205 are exemplarily made of a thermally conductive material and each comprise a cavity for the corresponding heating element 206, 208 to be arranged in. The primary heating element 206 is arranged in a cavity within the primary liquid reservoir 203 and the secondary heating element 208 is arranged in a cavity within the secondary liquid reservoir 205. In operation, the heat radiated by the primary heating element 206 heats up the primary liquid reservoir 203, inducing a vaporization of the concentrated nicotine solution on the solid carrier material 16 therein while the heat radiated by the secondary heating element 208 heats up the secondary liquid reservoir 205, inducing a vaporization of the base liquid/flavoured liquid therein. However, it is also possible to realize other electronic smoking devices 201 as show in Figure 3 with other arrangements of the primary and secondary heating elements 206, 208 within the device 201 and other thermal mechanisms for the vaporization of the liquids contained within the respective reservoirs 203, 205. In this third embodiment, the solid carrier material 16 exemplarily comprises a metal mesh. However, a solid carrier material 16 can also comprise other sorts of materials and/or other elements to receive nicotine. Furthermore, it is also possible to realize other electronic smoking devices 201 with other carrier materials, e. g. non-solid carrier materials, which also can comprise further elements as for example a waxy matrix or the like. Furthermore, the solid carrier material 16 can also be adapted to receive another substance different from nicotine, as for example herbs to deliver aroma or pharmacologically active compounds. Moreover, in other embodiments, a carrier material, especially a non-solid carrier material can also be adapted to receive another substance different from nicotine, as for example herbs to deliver aroma or pharmacologically active compounds.

In this third embodiment, the primary and secondary liquid reservoir 203, 205 each have a length that does not extend up to the mouthpiece 18, forming a gap between the primary and secondary liquid reservoir 203 and the mouthpiece 18 respectively, opening up air passages 32, 33 on either side of the liquid reservoirs 203, 205. However, the atomizer/liquid reservoir portion 202 is horizontally separated along its whole length via the separation wall 35. Expressed in other words, the separation wall 35 fully separates the two different compartments of the atomizer/liquid reservoir portion 202 in which the primary and secondary liquid reservoirs 203, 205 are arranged in respectively. Therefore, aerosol leaving e.g. the primary liquid reservoir 203 cannot enter the compartment of the atomizer/liquid reservoir portion 202 the secondary liquid reservoir 205 is arranged in and vice versa. Both the primary and the secondary liquid reservoir 203, 205 comprise a pressure relief valve 40 arranged directly in front of the corresponding connection element of the primary and secondary liquid reservoir 3-1, 5-1 respectively. This allows aerosol generated within the primary liquid reservoir 203 to exit the same and to enter the connection element of the primary liquid reservoir 3-1 and aerosol generated within the secondary liquid reservoir 205 to exit the same and to enter the connection element of the secondary liquid reservoir 5-1. However, it is also possible to realize other elements or constructions within the liquid reservoirs 203, 205 which allow aerosol generated within the reservoirs 203, 205 to exit the same without a valve 40 coming to use.

Also in this third embodiment, the atomizer/liquid reservoir portion 202 comprises a mouthpiece 18 with a connection element of the primary liquid reservoir 3-1 and a connection element of the secondary liquid reservoir 5-1, each representing a separate tubing for aerosol generated within the primary liquid reservoir 203 and within the secondary liquid reservoir 205 respectively. Expressed in other words, also in this third embodiment, the electronic smoking device 201 further comprises a mouthpiece 18 with two air inhalation ports 20-1, 20-2 therein, wherein the primary and the secondary liquid reservoir 203, 205 each comprise a connection element 3-1, 5-1, adapted to separately guide atomized liquid from the respective liquid reservoir 203, 205 to the respective air inhalation port 20-1, 20-2. Therefore, gaseous particles generated within the primary and secondary liquid reservoirs 203, 205 are separately guided to a corresponding inhalation port 20-1, 20-2 respectively. In such an embodiment, aerosol generated within the primary liquid reservoir 203 is strictly separated from aerosol generated within the secondary liquid reservoir 205. Such a separate tubing within the mouthpiece 18 avoids mixing of nicotine and base liquid or flavored liquid that adheres to the tubing as a result of condensation of liquid particles from previous puffs.

Figure 4 is a schematic cross-sectional illustration of a fourth embodiment of an electronic smoking device 301. The fourth embodiment of the electronic smoking device 301 is substantially identical to the first, second and third embodiment of an electronic smoking device 1, 101, 201 as shown in Figure 1, 2 and 3. Therefore, the reference signs in Figure 1, 2 and 3, which are identical to the respective reference signs shown in Figure 4, denote equal components for which the description as given above does apply. In this fourth embodiment, the electronic smoking device 301 differs from the electronic smoking devices 1, 101, 201 as described before in the primary and secondary liquid reservoir 303, 305, in the primary and secondary heating element 306, 308 and in the operation unit 314. In this fourth embodiment, the operation unit 314 is substantially designed as the operation unit 214 of the third embodiment of the electronic smoking device 201, also comprising a control unit (not shown) and a signal generation unit (not shown). However, the operation unit 314 is further adapted to supply a plurality of pulses of power with a predefined frequency of f₁ to the primary heating element 306 upon an actuation of the activation switch 312. These pulses of power cause a pulsed delivery of aerosol to the mouth of the consumer or user of the device 301. It is well established that the human sensory system is more receptive to a stimulus - as for example nicotine or aroma -when given in a pulsatile rather than in a continuous fashion. Therefore, the same amount of for example an aroma or nicotine is perceived as more intense when given in a pulsatile rather than continuous fashion. As in this fourth embodiment, the olfactory and trigeminal receptors of the human body are stimulated in an alternating fashion causing the intensity of the nicotine induced trigeminal effect to be enhanced. Therefore, the consumer experience of nicotine is enhanced, or alternatively, the amount of nicotine per puff can be reduced without compromising on its intensity. The latter has not only economic advantages for the manufacturer but also reduces the exposure of the consumer to inhaled compounds, as for example nicotine.

Furthermore, in this fourth embodiment, the operation unit 314 is adapted to supply a pulse of power to the secondary heating element 308 with a width W extending from the first pulse of power supplied to the primary heating element 306 to the last pulse of power supplied to the primary heating element 306. In more detail, while the primary heating element 306 is operated in a pulsed fashion, the secondary heating element 308 is operated in a continuous fashion, wherein the end of the pulse of power used to operate the secondary heating element 308 falls together with the end of the last pulse of power used to operate the primary heating element 306. In such an embodiment, even very sensitive consumers will not perceive the pulsatile operation of the primary heating element 306, since aroma compounds are always supplied when nicotine is supplied as well, preventing nicotine from being inhaled alone.

Also in this fourth embodiment of the invention, the atomizer/liquid reservoir portion 302 is horizontally separated along its whole length via the separation wall 35. Expressed in other words, the separation wall 35 fully separates the two different compartments of the atomizer/liquid reservoir portion 302 in which the primary and secondary liquid reservoirs 303, 305 are arranged in respectively. Therefore, aerosol leaving e.g. the primary liquid reservoir 303 cannot enter the compartment of the atomizer/liquid reservoir portion 302 the secondary liquid reservoir is arranged in and vice versa. The primary and secondary liquid reservoirs 303, 305 both do not extend along the whole length of the atomizer/liquid reservoir portion 302, leaving a gap between the respective liquid reservoir 303, 305 and the mouthpiece 18, forming air passages 32, 33 respectively. In this fourth embodiment of the invention, both the primary and the secondary liquid reservoir 303, 305 each comprise a wick 17, extending in a direction which is parallel to the side wall 35 of the atomizer/liquid reservoir portion 302 respectively. Each wick 17 is arranged within a cavity of the primary and secondary liquid reservoir 303, 305 respectively. In more detail, a substantially U-shaped cavity is arranged within the primary liquid reservoir 303 and within the secondary liquid reservoir 305 respectively. Two of the inner side walls of these cavities are connected via a wick 17 respectively, allowing fluid within the respective liquid reservoir 303, 305 to flow from a first side of the respective liquid reservoir 303, 305 facing the operation unit 314 through the wick 17 to a second side of the respective liquid reservoir 303, 305 facing the mouthpiece 18. In this fourth embodiment, the wicks 17 are made of a porous material respectively such as a bundle of fiberglass fibers, with liquid in the respective liquid reservoirs 303, 305 drawn by capillary action from the ends of the wick 17 towards the central portion of the wick 17 respectively. In other embodiments, the primary and secondary liquid reservoirs 303, 305 may alternatively include wadding soaked in liquid with the ends of the wick 17 abutting the wadding. In other embodiments the primary and/or secondary liquid reservoirs 303, 305 each may comprise a toroidal cavity arranged to be filled with liquid and with the ends of the wick 17 extending into the toroidal cavity.

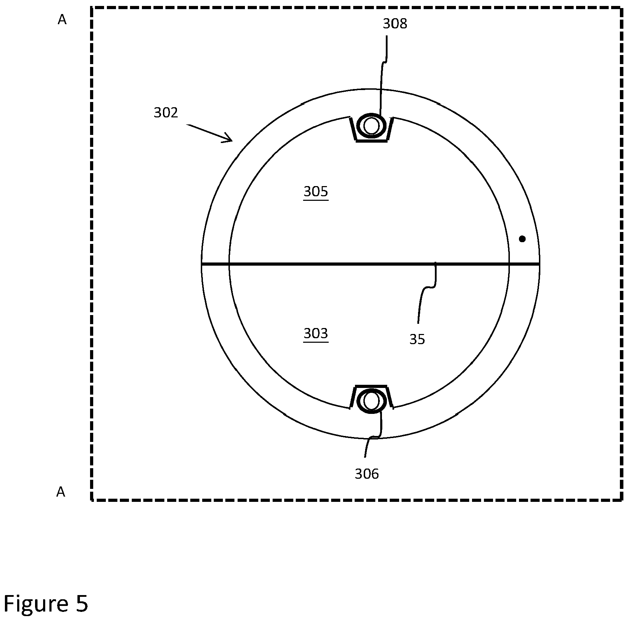

In this fourth embodiment of the electronic smoking device 301, the primary and secondary heating elements 306, 308 are exemplarily realized as heating coils. However, it is also possible to realize electronic smoking devices 301 as shown in Figure 4 with other sorts of heating elements 306, 308. The primary heating element 306 is wrapped around the wick 17 of the primary liquid reservoir 303. The secondary heating element 308 is wrapped around the wick 17 of the secondary liquid reservoir 305. The first terminals of the heating coils of the primary and secondary heating element 306, 308 are electrically connected to the operation unit 314 respectively. Furthermore, the second terminals of the heating coils of the primary and secondary heating element 306, 308 are electrically connected with each other and with the operation unit 314 via a connector which in Figure 4 is shown as a partly dotted line since it is arranged behind the liquid reservoirs 303, 305. This will be described further with respect to Figure 5.

In use, the primary heating element 306 will vaporize concentrated nicotine within the wick 17 of the primary liquid reservoir 303 in a pulsatile fashion. This will produce aerosol waves which flow around the primary liquid reservoir 303 within the compartment of the atomizer/liquid reservoir portion 302 the primary liquid reservoir 303 is arranged in, through the air passage 32, through the connection element of the primary liquid reservoir 3-1, through the primary air inhalation port 20-1 and into the mouth of the user. Furthermore, the secondary heating element 308 will vaporize the base liquid/flavoured liquid within the wick 17 of the secondary liquid reservoir 305 in a continuous fashion. This will produce aerosol waves which flow around the secondary liquid reservoir 305 within the compartment of the atomizer/liquid reservoir portion 302 the secondary liquid reservoir 305 is arranged in, through the air passage 33, through the connection element of the secondary liquid reservoir 5-1, through the secondary air inhalation port 20-2 and into the mouth of the user.

In Figure 4, a dashed line denoted A indicates a cross section A through the atomizer/liquid reservoir portion 302 of the electronic smoking device 301, which is described further in Figure 5. The cross section A of the atomizer/liquid reservoir portion 302 of the electronic smoking device 301 shows the circular housing of the same. Furthermore, it shows the substantially semi circular cross section of the primary and secondary liquid reservoirs 303, 305 respectively which are separated by the separation wall 35 extending through the entire atomizer/liquid reservoir portion 302. Furthermore, the cavities of the primary and secondary liquid reservoirs 303, 305 with the wicks 17 therein are shown respectively. Moreover, a winding of the primary and the secondary heating element 306, 308, being arranged around the wicks 17 are shown respectively. Furthermore, the electronic connector electrically interconnecting the second terminals of the primary and the secondary heating element 306, 308 and the operation unit (not shown) is indicated in between the housing of the primary liquid reservoir 305 and the housing of the atomizer/liquid reservoir portion 302 by a single dot.

Figure 6 is a schematic cross-sectional illustration of a fifth embodiment of an electronic smoking device 401. The fifth embodiment of an electronic smoking device 401 is substantially identical to the fourth embodiment of an electronic smoking device 301 as shown in Figure 4 and 5. Therefore, the reference signs in Figure 4 and 5, which are identical to the respective reference signs shown in Figure 6, denote equal components for which the description as given above does apply. In this fifth embodiment, the electronic smoking device 401 comprises an operation unit 414, which is substantially identical to the operation unit 314 of the fourth embodiment of the electronic smoking device 301. However, in this fifth embodiment, the operation unit 414 is further adapted to supply a plurality of pulses of power with a predefined frequency of f₂ to the secondary heating element 408 upon an actuation of the activation switch 412. In such an embodiment, also the secondary heating element 408 is operated in a pulsed fashion and the base liquid or flavored liquid within the secondary liquid reservoir 405 is supplied in waves or vapor pulses to the mouth of the user. As in this fifth embodiment, the olfactory and trigeminal receptors of the human body are stimulated in an alternating fashion causing the intensity of the aroma compounds and the trigeminal effect to be enhanced. Therefore, the consumer experience of the aroma compounds is enhanced, or alternatively, the amount of aroma compounds per puff can be reduced without compromising on their intensity. In this fifth embodiment, f1 is equal to f2 wherein no pulse of power is supplied to the primary heating element 406 when a pulse of power is supplied to the secondary heating element 408 and vice versa. In such an embodiment, the waves of the nicotine aerosol and the base liquid aerosol or the flavored aerosol are perceived as evenly distributed and will provide nicotine and aroma compounds or flavored compounds in a well-balanced ratio. Moreover, in this fifth embodiment, the width W of a pulse of power supplied to the primary heating element 406 is equal to the distance between two consecutive pulses of power supplied to the primary heating element 406. This will advantageously halve the amount of nicotine consumed while the stimulation of the olfactory and trigeminal receptors of the human body is maintained on a level comparable to a level of stimulation reached with a conventional electronic smoking device of the state of the art. Furthermore, the width W of a pulse of power supplied to the secondary heating element 408 is equal to the distance between two consecutive pulses of power that are supplied to the secondary heating element 408. This will advantageously halve the amount of aroma compounds or base liquid/ flavored liquid consumed while the stimulation of the olfactory and trigeminal receptors of the human body is maintained on a level comparable to a level of stimulation reached with a conventional electronic smoking device of the state of the art. However, it is also possible to realize electronic smoking devices 401 as shown in Figure 6 with other operation units 414, which allow other fashions of operation of the primary and secondary heating elements 406, 408 respectively.

In this fifth embodiment of the electronic smoking device 401, also the atomizer/liquid reservoir portion 402 of the electronic smoking device 401 is substantially identical to the atomizer/liquid reservoir portion 302 of the fourth embodiment of the electronic smoking device 301, but differs in the arrangement of the primary and secondary heating elements 406, 408 and the wicks 417 within the electronic smoking device 401 respectively. In this fifth embodiment of the electronic smoking device 401, the primary and secondary heating element 406, 408 and the corresponding wicks 417 are arranged in a direction that is perpendicular to the direction of extension of the side wall 35. Expressed in other words, in this fifth embodiment, the primary and secondary liquid reservoir 403, 405 both enclose a cavity with a wick 417 therein respectively. Also in this fifth embodiment, the wicks 417 are made of a bundle of fiberglass fibers respectively, which is a porous material, with liquid in the respective liquid reservoirs 403, 405 being drawn by capillary action from the ends of each wick 417 towards the central portion of the wick 17 respectively. In other embodiments, the primary and secondary liquid reservoirs 403, 405 may alternatively include wadding soaked in liquid with the ends of the respective wick 417 abutting the wadding. In other embodiments the primary and/or the secondary liquid reservoirs 403, 405 each may comprise a toroidal cavity arranged to be filled with liquid and with the ends of the wick 17 extending into the toroidal cavity.

The heating coil of the primary heating element 406 is wrapped around the wick 417, which is arranged within the cavity of the primary liquid reservoir 403, wherein the heating coil of the secondary heating element 408 is wrapped around the wick 417, which is arranged within the cavity of the secondary liquid reservoir 405. Also in this embodiment, the side wall 35 fully separates the atomizer/liquid reservoir portion 402 into two separate compartments the primary and secondary liquid reservoirs 403, 405 are arranged in.

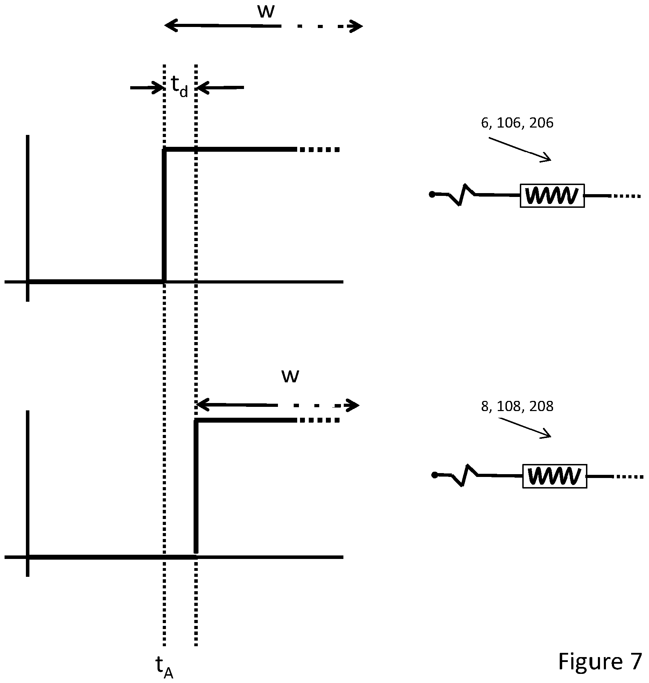

Figure 7 is a diagram showing a first exemplary mode of operation of the primary and secondary heating element 6, 106, 206, 8, 108, 208 of the first, second and third embodiment of an electronic smoking device 1, 101, 201. In more detail, the two diagrams of Figure 7 show how the primary and secondary heating elements 6, 106, 206, 8, 108, 208 of the first, second and third embodiment of an electronic smoking device 1, 101, 201 are operated respectively upon an actuation of the respective activation switch 12, 212. Expressed in other words, the two diagrams of Figure 7 show how pulses of power are supplied to the primary and secondary heating elements 6, 106, 206, 8, 108, 208 of the first, second and third embodiment of an electronic smoking device 1, 101, 201 respectively, upon an actuation of the respective activation switch 12, 212. For the sake of an easier understanding, this will be described only for the first embodiment of the electronic smoking device 1, however the following description does also apply for the second and third embodiment of an electronic smoking device 101, 201 as described above.

To an activation time t_{A}, the activation switch 12 realized as an airflow sensor is actuated which activates the electronic smoking device 1, causing the operation unit 14 to supply a first pulse of power to the primary heating element 6. After a delay time t_{d}, a pulse of power is supplied to the secondary heating element 8, representing a non-simultaneous supply of pulses of power to the primary and the secondary heating elements 6, 8 respectively. The width W of the respective pulses of power supplied is predefined and in this embodiment exemplarily equal to four seconds. However, the width W of a respective pulse of power supplied to the primary and/or secondary heating element 6, 8 can fundamentally differ from the one described above and be configured alterable by a user.

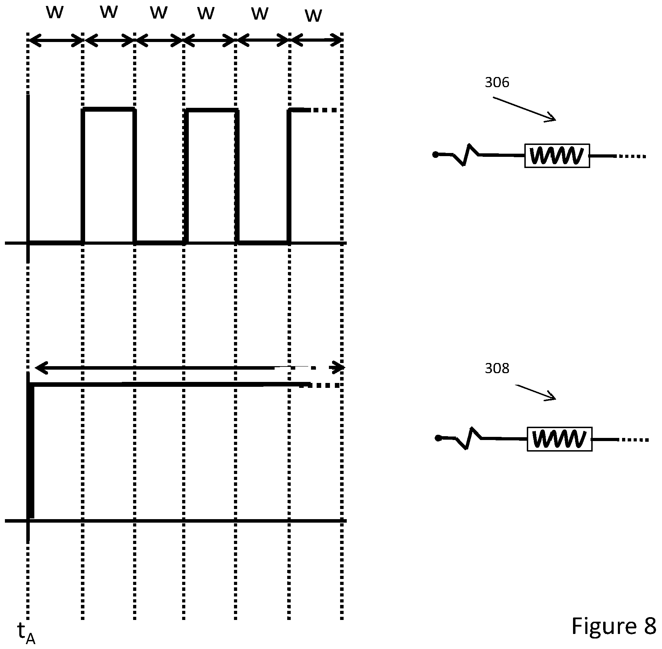

Figure 8 is a diagram showing a second exemplary mode of operation of the primary and secondary heating element 306, 308 of the fourth embodiment of an electronic smoking device 301. In more detail, the two diagrams of Figure 8 show how the primary and secondary heating element 306, 308 of the fourth embodiment of an electronic smoking device 301 are operated respectively upon an actuation of the activation switch 312. Expressed in other words, the two diagrams of Figure 8 show how pulses of power are supplied to the primary and secondary heating element 306, 308 of the fourth embodiment of an electronic smoking device 301 respectively upon an actuation of the activation switch 312.

To an activation time t_{A}, the activation switch 312 is actuated which activates the electronic smoking device 301, causing the operation unit 314 to supply a series of pulses of power with a predefined frequency of f₁ to the primary heating element 306 of the electronic smoking device 301. At the same time, in this fourth embodiment of an electronic smoking device 301, the operation unit 314 is adapted to supply a continuous pulse of power to the secondary heating element 308. This continuous pulse of power supplied to the secondary heating element 308 is non-simultaneous with all the pulses of power supplied to the primary heating element 306, which follow the first pulse of power supplied to the same. In this fourth embodiment, the width W of the pulse of power supplied to the secondary heating element 308 is exemplarily defined by the beginning of the first pulse of power supplied to the primary heating element 306 and the end of the last pulse of power supplied to the primary heating element 306. In this fourth embodiment, the end of the last pulse of power supplied to the primary heating element 306 exemplarily marks the end of the pulse of power supplied to the secondary heating element 308 as well. The width W of the respective pulses of power supplied to the primary heating element 306 is predefined and in this embodiment exemplarily equal to 0.5 seconds. However, the width W of a pulse of power supplied to the primary heating element 306 can fundamentally differ from the one described above and be configured alterable by a user. Furthermore, the pulse of power supplied to the secondary heating element 308 can have another starting point, another end point and another width W, which can also be independent from the pulses of power supplied to the primary heating element 306.

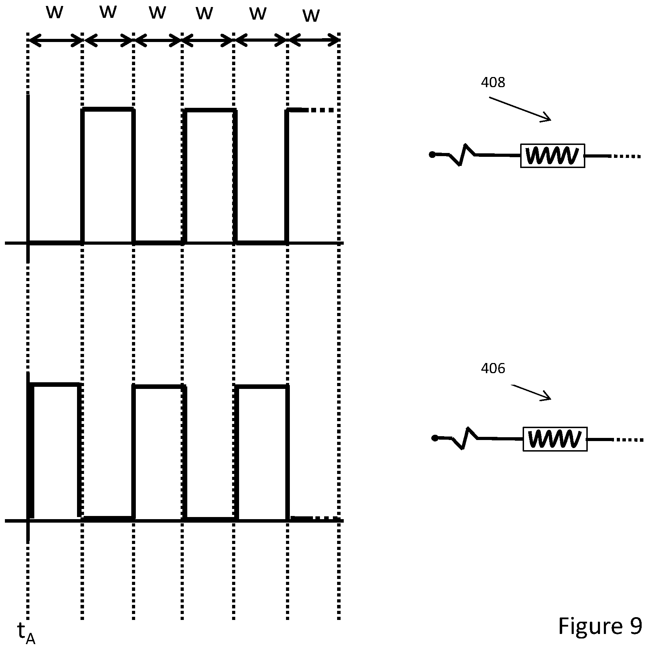

Figure 9 is a diagram showing a third exemplary mode of operation of the primary and secondary heating element 406, 408 of the fifth embodiment of an electronic smoking device 401. In more detail, the two diagrams of Figure 9 show how the primary and secondary heating element 406, 408 of the fifth embodiment of an electronic smoking device 401 are operated respectively upon an actuation of the activation switch 412. Expressed in other words, the two diagrams of Figure 9 show how pulses of power are supplied to the primary and secondary heating element 406, 408 of the fifth embodiment of an electronic smoking device 401 respectively upon an actuation of the activation switch 412.

To an activation time t_{A}, the activation switch 412 is actuated which activates the electronic smoking device 401, causing the operation unit 414 to supply a series of pulses of power with a predefined frequency of f₁ to the primary heating element 406. With a phase shift of one pulse of power, a series of pulses of power with a predefined frequency of f₂ is supplied to the secondary heating element 408. In this embodiment, the frequency f₁ is exemplarily equal to the frequency f₂. Furthermore, the width W of the respective pulses of power supplied to the primary heating element 406 is exemplarily equal to the width W of the respective pulses of power supplied to the secondary heating element 408, which in this fifth embodiment is exemplarily equal to 0.5 seconds. However, the width W of the pulses of power supplied to the primary and/or secondary heating element 6, 8 can fundamentally differ from the one described above and be configured alterable by a user. As can be seen in the diagrams shown in Figure 9, the different pulses of power are non-simultaneously supplied to the primary and secondary heating elements 406, 408 respectively.

As described above, the different embodiments of electronic smoking devices 1, 101, 201, 301, 401 have different operation unites 14, 114, 214, 314, 414 which allow different ways or fashions of operation of the primary and secondary heating elements 6, 106, 206, 306, 406, 8, 108, 208, 308, 408. However, any embodiment described above can have any operation unit 14, 114, 214, 314, 414 described above. For example, the first embodiment of an electronic smoking device 1 can have the operation unit 114, 214, 314, 414 of the second, third, fourth or fifth embodiment of an electronic smoking device 101, 201, 301, 401 and vice versa. The second embodiment of an electronic smoking device 101 can have the operation unit 14, 214, 314, 414 of the first, third, fourth or fifth embodiment of an electronic smoking device 101, 201, 301, 401 and so on.

Furthermore, the operation unit 14, 114, 214, 314, 414 of any one of the electronic smoking devices 1, 101, 201, 301, 401 as described above can alternatively combine the functionalities of at least some of the operation units 14, 114, 214, 314, 414 and the first, second and third exemplary mode of operation as described above. For example, the operation unit 14 of the first embodiment of an electronic smoking device 1 an be adapted to operate the primary and secondary heating element 6, 8 as described for the first and for the fifth embodiment of an electronic smoking device 1, 301, allowing to operate the primary and secondary heating elements 6, 8 in a pulsatile or in continuous fashion. Whether the operation of the primary and the secondary heating element 6, 8 is performed in a pulsatile or in continuous fashion can be for example up to the choice of a user or be configured dependent on the amount of energy left in the battery 11 of the electronic smoking device 1. Furthermore, in all the embodiments described above, a pulse of power can also be a pulse of a current and/or a pulse of a voltage. Moreover, the primary and the secondary liquid reservoir 3, 103, 203, 303, 403, 5, 105, 205, 305, 405 of all embodiments can be adapted to receive nicotine, base liquid, aroma or a flavored liquid, so that both liquid reservoirs 3, 103, 203, 303, 403, 5, 105, 205, 305, 405 can for example be filled with a different aroma respectively. Furthermore, other embodiments of electronic smoking devices can be realized with other operation units that allow other fashions of non-simultaneous operations of the primary and secondary heating elements of the electronic smoking device, which have not been described above. Furthermore, all the different embodiments of electronic smoking devices 1, 101, 201, 301, 401 can comprise a solid carrier material and/or a carrier material, especially a non-solid carrier material as described for the third embodiment of an electronic smoking device 201 with respect to Figure 3.

Expressed in other words, the electronic smoking device comprises several chambers with autonomous battery powered heating elements and a separate tubing respectively to deliver the aerosolized compounds directly into the mouth of a consumer, for example with one chamber for the base liquid, one chamber for flavor/aroma and one chamber for nicotine. The puff duration, which usually ranges between 2 and 4 seconds, determines the amount of nicotine and aroma compounds delivered as well as the duration of a continuous or alternating stimulation of the trigeminal by the nicotine compounds and the olfactory receptors by the aroma compounds. The stimulation of trigeminal receptors evokes sensation such as pain, irritation, heat and the like. As the consumer draws at the electronic smoking device, the heating element for aerosolizing the flavor and/or the heating element for aerosolizing the nicotine is activated in a fast on-off mode respectively to create a series of flavor and/or nicotine aerosol pulses. These pulses are delivered directly into the mouth of the consumer where they are combined with the base liquid aerosol given in a continuous or alternating fashion. As the olfactory and trigeminal receptors are stimulated in an alternating fashion, the intensity of the aroma compounds and the nicotine induced trigeminal effect is enhanced.

Aroma compounds and nicotine can be present in the form of solutions and/or adhering to a solid material. The vapor will be generated via the aeroionisation of the mixture. In addition to the above, two different flavors, as for example strawberry and mint can be delivered in an alternating fashion. This will create a novel sensory experience for the consumer. Similarly, it is possible to alternate nicotine and aroma pulses to provide the sensory system of the user with one stimulus or sensation at a time, which can further enhance the intensities of both aroma and nicotine, so that a user's brain only needs to focus on one stimulus at a time. The pulsatile delivery of nicotine and aroma compounds will enhance their intensity and allow a reduction of exposure of these compounds to the consumer without compromising on the consumer sensory experience and pleasure.

Furthermore, in order to reduce the oral deposition of nicotine and to increase its availability to the lungs, nicotine and base liquid and their respective vaporization within the electronic smoking device are space- and time-wisely separated from each other. If nicotine is present in a pure form, this will avoid the formation of nicotine-base liquid particles, which are likely to deposit in the oral cavity of a user. The spatial separation is realized by a two-chamber design with in this third embodiment concentrated nicotine-solution in a first chamber that is located next to a second separate chamber with base liquid and/or flavored liquid therein. Each chamber has an autonomous heating mechanism with the one for nicotine being activated prior to the one for the base liquid and being adapted to instantly evaporate the nicotine as the consumer starts drawing at the mouthpiece. As a result, first the mostly gaseous nicotine is delivered and, within a delay of for example 200ms, the base liquid aerosol follows as the second heating element is activated. The delay can be realized/programmed in a way that the consumer will not perceive the temporal and spatial separation of nicotine and the base liquid but nevertheless mixing of gaseous nicotine and base liquid aerosol particles is avoided. Each chamber is connected to the mouthpiece via a separate tubing in order to avoid mixing of nicotine and base liquid that may adhere to the tubing as a result of condensation of liquid particles from previous puffs. Since the gaseous nicotine is not mixed with further aerosols and purely consumed, the sensory properties of the same are enhanced, which can be described as a scratchiness in the throat which increases the consumer satisfaction.

It is provided an electronic smoking device comprising a primary and a secondary liquid reservoir. The electronic smoking device further comprises a primary heating element adapted to atomize liquid of the primary liquid reservoir and a secondary heating element adapted to atomize liquid of the secondary liquid reservoir. Moreover, the electronic smoking device comprises a battery, an activation switch and an operation unit, electrically connected to the battery and the primary and secondary heating element respectively. The operation unit is adapted to non-simultaneously supply at least one pulse of power from the battery to the primary and the secondary heating element respectively upon an actuation of the activation switch.

An advantage of that may be that such a non-simultaneous operation of the primary and secondary heating element allows a space-wisely and time-wisely separated generation of a nicotine aerosol and for example a flavoured aerosol within the electronic smoking device. This reduces the deposition of nicotine in the oral cavity and increases its availability to the lungs of a user, since the nicotine can be generated and consumed prior to the generation and consumption of for example a flavoured aerosol.

In a preferred embodiment, the secondary liquid reservoir is adapted to receive a base liquid and/or a flavoured liquid, wherein the primary liquid reservoir is adapted to receive a concentrated nicotine-solution. An advantage of that may be that the electronic smoking device advantageously allows the separate consumption of nicotine and aroma.

Preferably, the primary liquid reservoir is adapted to receive a solid carrier material with the concentrated nicotine-solution adhering thereto. An advantage of that may be that the storage, arrangement and availability of nicotine within the primary liquid reservoir is thereby improved. Preferably, the solid carrier material comprises a metal mesh. Furthermore preferred, the primary liquid reservoir is adapted to receive a carrier material, especially a non-solid carrier material with the concentrated nicotine-solution adhering thereto. Preferably, the carrier material comprises a matrix of wax. Furthermore preferred the solid carrier material and/or the carrier material are adapted to receive any substance.

In a preferred embodiment, a pulse of power is supplied to the primary heating element prior to a supply of a pulse of power to the secondary heating element. An advantage of that may be the time-wise separation of the supply of nicotine aerosol and the supply of a base liquid aerosol or flavored aerosol, increasing the availability of nicotine to the body of a user. Therefore, nicotine is delivered in the form of a gas, preceding the delivery of a base liquid aerosol / flavored aerosol in order to avoid or reduce a deposition of nicotine in the mouth cavity. This will improve nicotine pharmacokinetics as the availability of nicotine to the lungs is increased and is beneficial for the consumer as nicotine craving is mediated to a larger extend than in a conventional electronic smoking device. Furthermore, together with enhanced nicotine sensory properties, this may mimic a better smoking experience and thus facilitate a consumers attempt to quit smoking.

Preferably, the time interval between a pulse of power supplied to the primary heating element and a pulse of power supplied to the secondary heating element has a length of T, wherein T ∈ [100ms; 300ms]. Furthermore preferred, the delay time between a pulse of power supplied to the primary heating element and a pulse of power supplied to the secondary heating element has a length of T, wherein T ∈ [100ms; 300ms]. An advantage of that may be that the time gap between the two pulses of power can be adjusted according to the sensorial characteristics of a user.

In a preferred embodiment, the time interval between a pulse of power supplied to the primary heating element and a pulse of power supplied to the secondary heating element has a length of T = 200ms. An advantage of that may be that the delay time t_{d} and therefore the time interval between a pulse of power supplied to the primary heating element and a pulse of power supplied to the secondary heating element is long enough for nicotine from the primary liquid reservoir to be separately inhaled by a user and short enough for a user to be incapable of realising the time-wise separation of nicotine supply and the supply of the base liquid or the flavoured liquid.

Furthermore preferred, the width W of a pulse of power supplied to the primary and/or the secondary heating element is predefined and/or controllable by a user. An advantage of that may be that the width W of a pulse of power supplied to the primary and/or secondary heating element can be adjusted according to the respective preferences of a user of the electronic smoking device.

In a preferred embodiment, the operation unit is adapted to supply a plurality of pulses of power with a predefined frequency of f₁ to the primary heating element upon an actuation of the activation switch. An advantage of that may be that the consumer experience of nicotine is enhanced, or alternatively, the amount of nicotine per puff can be reduced without compromising on its intensity. The latter has not only economic advantages for the manufacturer but also reduces the exposure of the consumer to inhaled compounds.

Preferably, a pulse of power supplied to the secondary heating element has a width W extending from the first pulse of power supplied to the primary heating element to the last pulse of power supplied to the primary heating element. An advantage of that may be that even very sensitive consumers will not perceive the pulsatile operation of the primary heating element, since aroma compounds are always supplied when nicotine is supplied as well, preventing nicotine from being inhaled alone.

In a preferred embodiment, the operation unit is adapted to supply a plurality of pulses of power with a predefined frequency of f₂ to the secondary heating element upon an actuation of the activation switch. An advantage of that may be that also the secondary heating element is operated in a pulsatile fashion and the base liquid or flavored liquid within the secondary liquid reservoir is supplied in waves or vapor pulses to the mouth of the user. This will cause the olfactory and trigeminal receptors of the human body to be stimulated in an alternating fashion causing the intensity of the aroma compounds and the trigeminal effect to be enhanced. Therefore, the consumer experience of the aroma compounds is enhanced, or alternatively, the amount of aroma compounds per puff can be reduced without compromising on their intensity.

Preferably, f₁ is equal to f₂ wherein no pulse of power is supplied to the primary heating element when a pulse of power is supplied to the secondary heating element and vice versa. An advantage of that may be that the waves of the nicotine aerosol and the base liquid aerosol or the flavored aerosol are perceived as evenly distributed and will provide nicotine and aroma compounds or flavored compounds in a well-balanced ratio.

Moreover preferred, the width W of a pulse of power supplied to the primary heating element is equal to the distance between two consecutive pulses of power supplied to the primary heating element. An advantage of that may be that the amount of nicotine consumed is halved while the stimulation of the olfactory and trigeminal receptors of the human body is maintained on a level comparable to a level of stimulation reached with a conventional electronic smoking device of the state of the art.

In a preferred embodiment, the width W of a pulse of power supplied to the secondary heating element is equal to the distance between two consecutive pulses of power that are supplied to the secondary heating element. An advantage of that may be that the amount of aroma compounds or base liquid/flavored liquid consumed is halved while the stimulation of the olfactory and trigeminal receptors of the human body is maintained on a level comparable to a level of stimulation reached with a conventional electronic smoking device of the state of the art.

Preferably, the electronic smoking device is further comprising a mouthpiece with at least one air inhalation port therein, wherein the primary and the secondary liquid reservoir each comprise a connection element, adapted to separately guide atomized liquid from the respective liquid reservoir to the air inhalation port. An advantage of that may be that gaseous particles generated within the primary and the secondary liquid reservoirs respectively are separately guided to a corresponding inhalation port. In such an embodiment, aerosol generated within the primary liquid reservoir is strictly separated from aerosol generated within the secondary liquid reservoir and advantageously maintained separated until it is consumed by a user of the electronic smoking device.

Furthermore preferred, the operation unit comprises a signal generation unit adapted to provide operation signals to a control unit upon an actuation of the activation switch and a control unit adapted to cause power from the battery to be supplied to the primary and the secondary heating element according to the operation signals. An advantage of that may be that this allows a very flexible and precise control of the pulses of power or current pulses supplied to the primary and secondary heating element respectively, since the duration for which a primary and secondary heating element is conductively connected to the battery can precisely be controlled.

In addition to the foregoing explanations, the following enumerated aspects 1 to 15 are also relevant to the present disclosure:
1. An electronic smoking device (1) comprising:
   - a primary and a secondary liquid reservoir (3, 5);
   - a primary heating element (6) adapted to atomize liquid of the primary liquid reservoir (3);
   - a secondary heating element (8) adapted to atomize liquid of the secondary liquid reservoir (5);
   - a battery (11);
   - an activation switch (12);
   - an operation unit (14), electrically connected to the battery (11) and the primary and secondary heating element (6, 8) respectively;
   wherein,
   the operation unit (14) is adapted to non-simultaneously supply at least one pulse of power from the battery (11) to the primary and the secondary heating element (6, 8) respectively upon an actuation of the activation switch (12).
2. The electronic smoking device (1) according to aspect 1, wherein the secondary liquid reservoir (5) is adapted to receive a base liquid and/or a flavoured liquid and wherein the primary liquid reservoir (3) is adapted to receive a concentrated nicotine-solution.
3. The electronic smoking device (1) according to aspect 2, wherein the primary liquid reservoir (3) is adapted to receive a solid carrier material (16) with the concentrated nicotine-solution adhering thereto.
4. The electronic smoking device (1) according to any one of the previous aspects, wherein a pulse of power is supplied to the primary heating element (6) prior to a supply of a pulse of power to the secondary heating element (8).
5. The electronic smoking device (1) according to aspect 4, wherein the time interval between a pulse of power supplied to the primary heating element (6) and a pulse of power supplied to the secondary heating element (8) has a length of T, wherein T ∈ [100ms; 300ms]
6. The electronic smoking device (1) according to aspect 5, wherein the time interval between a pulse of power supplied to the primary heating element (6) and a pulse of power supplied to the secondary heating element (8) has a length of T = 200ms.
7. The electronic smoking device (1) according to any one of the previous aspects, wherein the width W of a pulse of power supplied to the primary and/or the secondary heating element (6, 8) is predefined and/or controllable by a user.
8. The electronic smoking device (1) according to any one of the previous aspects, wherein the operation unit (14) is adapted to supply a plurality of pulses of power with a predefined frequency of f₁ to the primary heating element (6) upon an actuation of the activation switch (12).
9. The electronic smoking device (1) according to aspect 8, wherein a pulse of power supplied to the secondary heating element (8) has a width W extending from the first pulse of power supplied to the primary heating element (6) to the last pulse of power supplied to the primary heating element (6).
10. The electronic smoking device (1) according to any one of the aspects 1 to 8, wherein the operation unit (14) is adapted to supply a plurality of pulses of power with a predefined frequency of f₂ to the secondary heating element (8) upon an actuation of the activation switch (12).
11. The electronic smoking device (1) according to aspects 8 and 10, wherein f₁ is equal to f₂ and wherein no pulse of power is supplied to the primary heating element (6) when a pulse of power is supplied to the secondary heating element (8) and vice versa.
12. The electronic smoking device (1) according to aspect 11, wherein the width W of a pulse of power supplied to the primary heating element (6) is equal to the distance between two consecutive pulses of power supplied to the primary heating element (6).
13. The electronic smoking device (1) according to aspect 11 or 12, wherein the width W of a pulse of power supplied to the secondary heating element (8) is equal to the distance between two consecutive pulses of power that are supplied to the secondary heating element (8).
14. The electronic smoking device (1) according to any one of the previous aspects, further comprising a mouthpiece (18) with at least one air inhalation port (20-1, 20-2) therein, wherein the primary and the secondary liquid reservoir (3, 5) each comprise a connection element (3-1, 5-1), adapted to separately guide atomized liquid from the respective liquid reservoir (3, 5) to the air inhalation port (20-1, 20-2).
15. The electronic smoking device (1) according to any one of the previous aspects, wherein the operation unit (14) comprises:
   - a signal generation unit (22) adapted to provide operation signals to a control unit (24) upon an actuation of the activation switch (12), and
   - a control unit (24) adapted to cause power from the battery (11) to be supplied to the primary and the secondary heating element (6, 8) according to the operation signals.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### LIST OF REFERENCE SIGNS

- 1, 101, 201, 301, 401: electronic smoking device
- 2, 102, 202, 302, 402: atomizer/liquid reservoir portion
- 3, 103, 203, 303, 403: primary liquid reservoir
- 3-1: connection element of the primary liquid reservoir
- 5, 105, 205, 305, 405: secondary liquid reservoir
- 5-1: connection element of the secondary liquid reservoir
- 6, 106, 206, 306, 406: primary heating element
- 8, 108, 208, 308, 408: secondary heating element
- 9: battery portion
- 11: battery
- 12, 212, 312, 412: activation switch
- 14, 114, 214, 314, 414: operation unit
- 16: solid carrier material
- 17,417: wick
- 18: mouthpiece
- 20-1: primary air inhalation port
- 20-2: secondary air inhalation port
- 22: signal generation unit
- 24: control unit
- 24-1: first switch
- 24-2: second switch
- 26: air inlets
- 28: light-emitting diode (LED)
- 30: end cap
- 32, 33: air passage
- 35: separation wall
- 36: driver unit
- 38: delay unit
- 40: pressure relief valve
- A: cross section
- W: width of a pulse of power
- t: time interval
- t_{A}: activation time
- t_{d}: delay time

## Claims

1. An electronic smoking device (1) comprising:
- a primary and a secondary liquid reservoir (3, 5);
- a primary heating element (6) adapted to atomize liquid of the primary liquid reservoir (3);
- a secondary heating element (8) adapted to atomize liquid of the secondary liquid reservoir (5);
- a battery (11);
- an activation switch (12);
- an operation unit (14), electrically connected to the battery (11) and the primary and secondary heating element (6, 8) respectively;
wherein,
the operation unit (14) is adapted to non-simultaneously supply at least one pulse of power from the battery (11) to the primary and the secondary heating element (6, 8) respectively upon an actuation of the activation switch (12), wherein a first electronic connector is electrically connected to a first terminal of the operation unit (14) and to a first terminal of the primary heating element (6), a second electronic connector is electrically connected to a second terminal of the operation unit (14) and to a first terminal of the secondary heating element (8), a third electronic connector is electrically connected to a third terminal of the operation unit (14) and to the second terminals of the primary and the secondary heating element (6, 8) respectively.

2. The electronic smoking device (1) according to claim 1, wherein the secondary liquid reservoir (5) is adapted to receive a base liquid and/or a flavoured liquid and wherein the primary liquid reservoir (3) is adapted to receive a concentrated nicotine-solution.

3. The electronic smoking device (1) according to claim 2, wherein the primary liquid reservoir (3) is adapted to receive a solid carrier material (16) with the concentrated nicotine-solution adhering thereto.

4. The electronic smoking device (1) according to any one of the previous claims, wherein a pulse of power is supplied to the primary heating element (6) prior to a supply of a pulse of power to the secondary heating element (8).

5. The electronic smoking device (1) according to claim 4, wherein the time interval between a pulse of power supplied to the primary heating element (6) and a pulse of power supplied to the secondary heating element (8) has a length of T, wherein T ∈ [100ms; 300ms].

6. The electronic smoking device (1) according to claim 5, wherein the time interval between a pulse of power supplied to the primary heating element (6) and a pulse of power supplied to the secondary heating element (8) has a length of T = 200ms.

7. The electronic smoking device (1) according to any one of the previous claims, wherein the width W of a pulse of power supplied to the primary and/or the secondary heating element (6, 8) is predefined and/or controllable by a user.

8. The electronic smoking device (1) according to any one of the previous claims, wherein the operation unit (14) is adapted to supply a plurality of pulses of power with a predefined frequency of f₁ to the primary heating element (6) upon an actuation of the activation switch (12).

9. The electronic smoking device (1) according to claim 8, wherein a pulse of power supplied to the secondary heating element (8) has a width W extending from the first pulse of power supplied to the primary heating element (6) to the last pulse of power supplied to the primary heating element (6).

10. The electronic smoking device (1) according to any one of the claims 1 to 8, wherein the operation unit (14) is adapted to supply a plurality of pulses of power with a predefined frequency of f₂ to the secondary heating element (8) upon an actuation of the activation switch (12).

11. The electronic smoking device (1) according to claims 8 and 10, wherein f₁ is equal to f₂ and wherein no pulse of power is supplied to the primary heating element (6) when a pulse of power is supplied to the secondary heating element (8) and vice versa.

12. The electronic smoking device (1) according to claim 11, wherein the width W of a pulse of power supplied to the primary heating element (6) is equal to the distance between two consecutive pulses of power supplied to the primary heating element (6).

13. The electronic smoking device (1) according to claim 11 or 12, wherein the width W of a pulse of power supplied to the secondary heating element (8) is equal to the distance between two consecutive pulses of power that are supplied to the secondary heating element (8).

14. The electronic smoking device (1) according to any one of the previous claims, further comprising a mouthpiece (18) with at least one air inhalation port (20-1, 20-2) therein, wherein the primary and the secondary liquid reservoir (3, 5) each comprise a connection element (3-1, 5-1), adapted to separately guide atomized liquid from the respective liquid reservoir (3, 5) to the air inhalation port (20-1, 20-2).

15. The electronic smoking device (1) according to any one of the previous claims, wherein the operation unit (14) comprises:
- a signal generation unit (22) adapted to provide operation signals to a control unit (24) upon an actuation of the activation switch (12), and
- a control unit (24) adapted to cause power from the battery (11) to be supplied to the primary and the secondary heating element (6, 8) according to the operation signals.
